# EUROPEAN PATENT SPECIFICATION

(11) **EP 3 038 906 B1**
(45) Date of publication and mention of the grant of the patent: **23.10.2019**
(21) Application number: 14840869.3
(22) Date of filing: 27.08.2014
(51) Int. Cl.: B64C 27/12, B64C 27/14, B64D 35/00, F16H 1/28, F16H 57/04

(54) **LIGHT WEIGHT PROPULSOR GEARBOX**
GEWICHTSREDUZIERTES ANTRIEBSGETRIEBE
BOÎTE D'ENGRENAGES DE PROPULSEUR LÉGÈRE

(30) Priority: 28.08.2013 US 201361871118 P
(43) Date of publication of application: 06.07.2016
(73) Proprietor: Sikorsky Aircraft Corporation, Stratford, CT 06615-9129 (US)
(72) Inventor: DARROW JR., David A., Stratford, Connecticut 06614-1300 (US); TULLY JR., Thomas L., Oxford, Connecticut 06478 (US)
(74) Representative: Schmitt-Nilson Schraud Waibel Wohlfrom Patentanwälte Partnerschaft mbB
(86) International application number: PCT/US2014/052830
(87) International publication number: WO 2015/031434

(56) References cited:
- EP-A1- 1 956 271
- US-A- 2 838 913
- US-A- 2 890 604
- US-A- 3 679 033
- US-A- 3 679 033
- US-A- 3 977 812
- US-A1- 2003 108 426
- US-A1- 2003 108 426
- US-A1- 2009 209 148
- US-A1- 2010 279 815
- US-A1- 2013 172 143

## Description

### BACKGROUND

The subject matter disclosed herein relates to aircraft propulsion systems and to a lightweight gearbox for an auxiliary propulsor in a rotary wing aircraft.

### DESCRIPTION OF RELATED ART

A rotary wing aircraft with a coaxial contra-rotating rotor system is capable of higher speeds as compared to conventional single rotor helicopters. This is due in part to the balance of lift between advancing sides of the main rotor blades on the upper and lower rotor systems. To still further increase airspeed and thrust for high speed flight, supplemental thrust is provided by a translational thrust system. A translational thrust system can include an integrated propulsor unit with a propulsor (e.g., a propeller) oriented substantially horizontal and parallel to the aircraft's longitudinal axis located aft of the main rotor system.

Typically for an integrated propulsor unit, control of the propeller is provided by a propeller transmission unit. The transmission unit includes a speed reduction gearbox that is connected to input and output shafting. Pitch control of the propeller is done with a pitch actuation unit that is located within the gearbox housing. However, this configuration makes the gearbox increase in size and weight. Therefore, there is a need for a lightweight gearbox that minimizes weight and still provide thrust for high-speed flight.

US 2 838 913 A shows two gas turbine engines arranged side by side, and coupled through a gearing to dual counter rotating propellers.

US 2 890 604 A shows a speed conversion system comprising an input shaft that drives a planetary gear mechanism which in turn drives an output shaft. The speed conversion system comprises loading devices (pumps) in meshing engagement with the planetary gear system.

US 3 679 033 A shows a hydraulic actuated propeller coupling for use in a helicopter type aircraft to selectively couple or uncouple a propeller to the output of a gas turbine engine normally used to drive a helicopter rotor.

US 3 977 812 A shows a compound helicopter having a rotor blade and a small wing, possessing a rear propulsion propeller adjacent to the tail rotor. A tail gearbox is driven through a drive train coupled to a main rotor drive shaft. In such aircraft the tail rotor is in operation when a propulsion propeller is turning, and vice versa. A mechanism is provided for stopping or feathering the tail rotor when driving the propulsion propeller, or for stopping the propulsion propeller when the tail rotor is in operation.

### BRIEF SUMMARY

According to one embodiment of the invention as defined by claim 1, a translational thrust system for a rotary wing aircraft comprises a propulsor gearbox assembly for a translational thrust propeller includes a housing defining an interior cavity; a planetary gear assembly contained within the interior cavity; an input shaft aligned on a first axis or rotation; and an output shaft aligned along a second axis of rotation. The first axis of rotation is coaxial with the second axis of rotation.

In addition to one or more of the features described above, further embodiments could include a planetary gear assembly that comprises a sun gear connected to the input shaft.

The system includes a planetary gear assembly that comprises a planetary carrier frame with a plurality of planetary gears.

The system further includes a planetary carrier frame is coupled to the output shaft along the second axis of rotation.

In addition to one or more of the features described above, further embodiments could include a plurality of planetary gears that are configured to engage the sun gear and rotate radially around the sun gear.

In addition to one or more of the features described above, further embodiments could include a planetary carrier frame that is configured to rotate around the sun gear in response to the rotation of the plurality of planetary gears.

The system further includes a gear-driven pump and a sump chamber contained within the interior cavity, where the gear-driven pump is configured to be driven by the planetary gear assembly.

In addition to one or more of the features described above, further embodiments could include a plurality of bearings, with a pair of bearings supporting the input shaft and a pair of bearings supporting the output shaft.

In addition to one or more of the features described above, further embodiments could include an input shaft that is configured to connect to a propeller drive shaft for receiving input torque.

In addition to one or more of the features described above, further embodiments could include an input shaft that is configured to connect to a clutch assembly, wherein the clutch assembly is in mechanical engagement with the propeller drive shaft for receiving input torque.

The system further includes an output shaft that is configured to be connected to a propeller.

According to another embodiment of the invention as defined by claim 8, a method of providing auxiliary thrust to a translational thrust propeller includes providing a propulsor gearbox comprises the following steps: connecting a propeller drive shaft to the input shaft of the propulsor gearbox; connecting the translational thrust propeller to the output shaft of the propulsor gearbox; and providing input torque to the propeller drive shaft and rotationally driving the planetary gear assembly.

The propulsor gearbox comprises a housing defining an interior cavity; a planetary gear assembly contained within the interior cavity; and preferably an input shaft connected to a sun gear of the planetary gear assembly and aligned on a first axis or rotation; and an output shaft connected to a planetary carrier frame of the planetary gear assembly and aligned along a second axis of rotation. The first axis of rotation is coaxial with the second axis of rotation.

The method further includes the step of: providing a gear-driven pump and a sump chamber within the interior cavity.

The gear-driven pump is configured to be driven by the planetary gear assembly.

In addition to one or more of the features described above, further embodiments could include connecting a clutch assembly between the tail propeller drive shaft and the input shaft.

In addition to one or more of the features described above, further embodiments could include a clutch assembly that is in mechanical engagement with the propeller drive shaft for receiving the input torque.

In addition to one or more of the features described above, further embodiments could include transmitting the input torque to the planetary carrier frame and rotationally driving the output shaft.

Other aspects, features, and techniques of the invention will become more apparent from the following description taken in conjunction with the drawings.

### BRIEF DESCRIPTION OF THE SEVERAL VIEWS OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which like elements are numbered alike in the several FIGURES:
FIG. 1 is a general side view of a rotary wing aircraft according to an embodiment of the invention;
FIG. 2 is a perspective view of an example transmission system of the rotary wing aircraft of FIG. 1 according to an embodiment of the invention;
FIG. 3 is a cross-section view of a propulsor gearbox of the rotary wing aircraft of FIG. 1 according to an embodiment of the invention; and
FIG. 4 is a perspective view of the propulsor gearbox of FIG. 3 according to an embodiment of the invention.

### DETAILED DESCRIPTION OF THE INVENTION

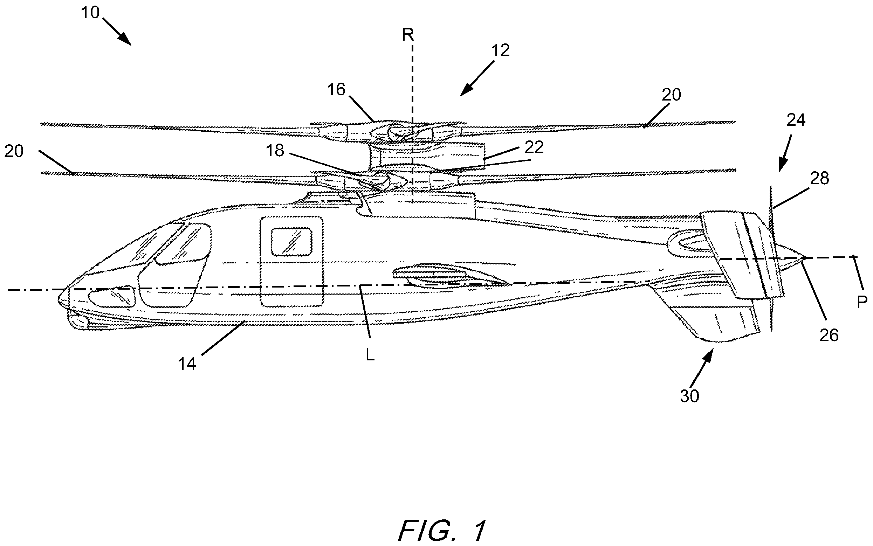

Referring to the drawings, FIG. 1 illustrates an example of a vertical takeoff and landing (VTOL) high speed compound or coaxial contra-rotating rotary wing aircraft 10 with an airframe 14 which supports a dual, contra-rotating main rotor system 12 and a translational thrust system 24. The translational thrust system 24, as shown, is located at a tail-section of aircraft 10. Alternatively, the translational thrust system 24 may be located at a mid-point of aircraft 10 and can include a pusher propeller, a tractor propeller, a nacelle mounted propeller, etc. The main rotor system 12 rotates about a rotor axis of rotation R and is driven for rotation by one or more engines 22. The main rotor system 12 includes an upper rotor system 16 and a lower rotor system 18 as dual contra-rotating main rotors in a coaxial configuration. Main rotor system 12 includes a plurality of rotor blades 20 mounted to each rotor system 16, 18 for lift, anti-torque and thrust.

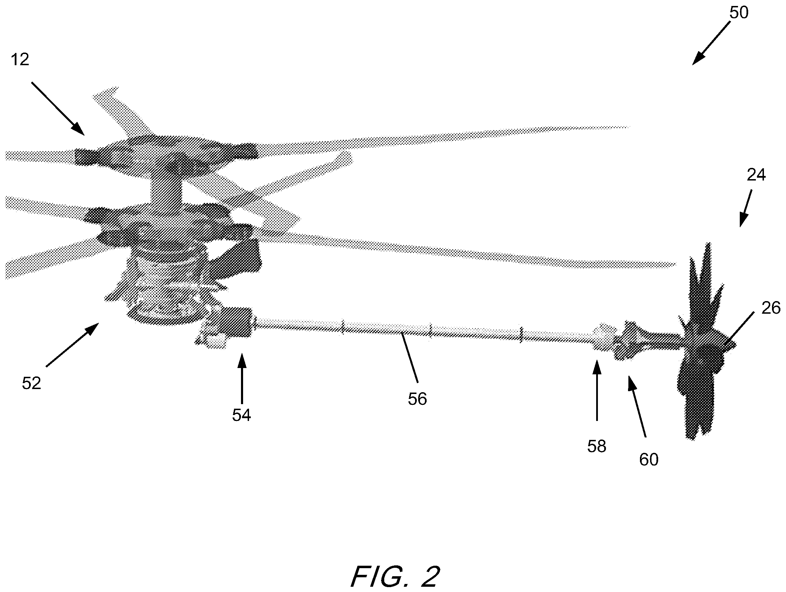

Also shown in FIG. 1, translational thrust system 24 provides supplemental or auxiliary thrust for aircraft 10. Translational thrust system 24 includes a propeller 26 with a plurality of propeller blades 28. In an embodiment, propeller 26 is positioned at a tail section 30 of aircraft 10 and is a pusher propeller system with a propeller rotational axis P oriented substantially horizontal and parallel to the aircraft longitudinal axis L in order to provide supplemental thrust for high speed flight. The translational thrust system 24 is driven for rotation by engines 22 through a speed reduction transmission system 50 which is shown and described below in reference to FIG. 2. Although a particular configuration of rotary wing aircraft 10 is illustrated and described in the disclosed non-limiting embodiments, other configurations and/or machines with rotor systems are within the scope of the present invention.

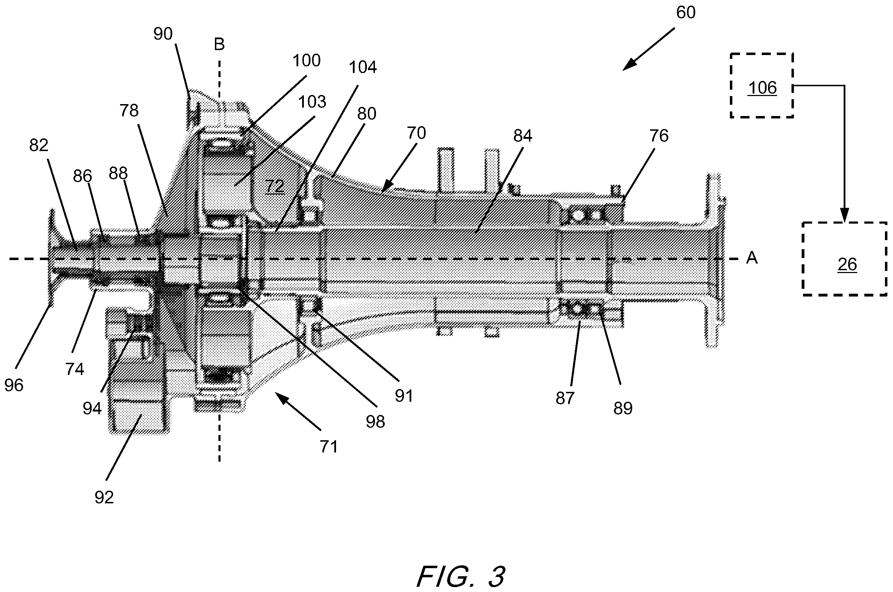

Referring to FIG. 2, a perspective view of a transmission system 50 of aircraft 10 is illustrated according to an embodiment of the invention. In an embodiment, transmission system 50 includes a main gearbox 52, an intermediate gearbox 54, a tail propeller drive shaft 56 and a translational thrust system 24. The translational thrust system 24 can include a clutch assembly 58 in mechanical engagement with propulsor gearbox 60. Main gearbox 52 can be a split-torque gearbox and transmits input torque that is received from engines 22 to rotationally drive main rotor system 12 and translational thrust system 24. Translational thrust system 24 is driven through a drivetrain path. In an embodiment, drivetrain path can include an intermediate gearbox 54 in meshing engagement with main gearbox 52. Intermediate gearbox 54 transmits input torque from main gearbox 52 to a tail propeller drive shaft 56. The intermediate gearbox 54 has a defined gearbox ratio to provide speed reduction (in revolutions per minute or "rpm") from an initial rpm at main gearbox 52 to a lower rpm at tail propeller drive shaft 56. In an embodiment, intermediate gearbox 54 has a gearbox ratio of about 1.626 to 1 to provide speed reduction at tail propeller drive shaft 56. Other gearbox ratios are also contemplated in the invention. The tail propeller drive shaft 56 can be connected to an input shaft 82 (FIG. 3) of the propulsor gearbox 60 in order to transmit torque from the drive shaft 56. In addition or as an alternative, an embodiment could include a clutch assembly 58 mechanically connected between tail propeller drive shaft 56 and input shaft 82 (FIG. 3) in order for a smooth engagement of torque at propulsor gearbox 60. The propulsor gearbox 60 further reduces the speed of rotation received from tail propeller drive shaft 56 to drive propeller 26 at a defined speed. Propulsor gearbox 60 has a single-stage planetary gear train, which has a specific gearbox ratio to provide speed reduction to propeller 26. In an embodiment, propulsor gearbox 60 has a gearbox ratio of about 5.86 to 1 to provide speed reduction to propeller 26.

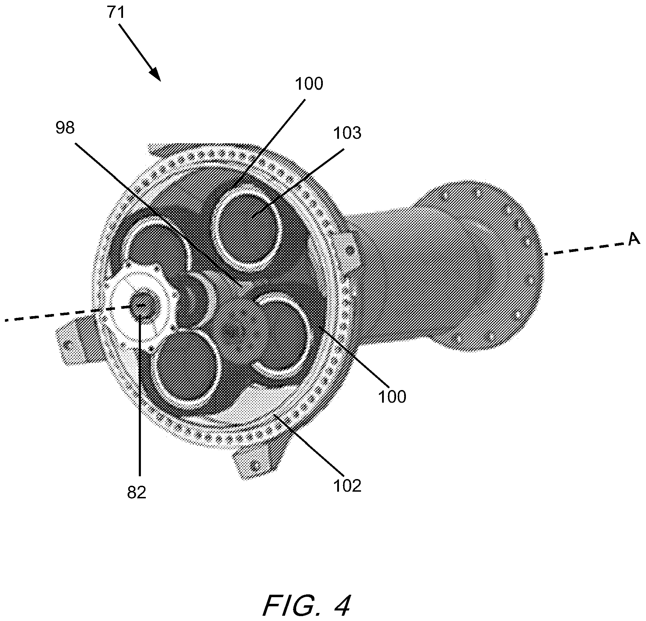

Referring to FIGS. 3 and 4, propulsor gearbox 60 with a single-stage planetary gear train 71 is shown according to embodiments. Propulsor gearbox 60 has a housing assembly 70, which includes a first portion 78 selectively attached to a second portion 80 with bolts, screws, or the like. Housing assembly 70 extends from a proximal end 74 to an aft end 76 and houses an internal cavity 72 along its longitudinal length. Internal cavity 72 is provided to receive respective input and output shafts 82, 84, planetary gear train 71 and associated bearings, as will be described in further detail below.

As shown in FIG. 3, housing assembly 70 has a first portion 78 with a first internal diameter at proximal end 74. First internal diameter increases to a second internal diameter at axis B. First internal diameter is sized to receive input shaft 82 that is constrained by its associated roller bearings 86, 88 at proximal end 74. First portion 78 also includes an integral wet sump oil system with a sump chamber 92 and a gear-driven pump 94 for circulating lubrication fluid to planetary gear train 71 and shafts 82, 84 during operation of gearbox 60. A plurality of substantially similar protrusions 90 are provided along an outer circumferential edge of first portion 78 along axis B to couple housing assembly 70 to a similar shaped annular bulkhead (not shown). Similarly, second portion 80 has a third internal diameter at aft end 76 that increases to a fourth internal diameter at axis B. Third internal diameter is sized to contain an output shaft 84 and its associated roller bearing 87 and angular contact bearing 89 at aft end 76. An additional contact bearing 91 may be provided to constrain shaft 84. Bearings 86, 87, 88, 89 and 91 function to constrain shaft thrust and bending moments that are experienced by input and output shafts 82 and 84. In an embodiment, second internal diameter is substantially the same as fourth internal diameter so as to selectively couple first portion 78 to second portion 80 along axis B. As shown schematically, a propeller pitch actuation system 106 may be provided externally and independent of propulsor gearbox 60.

Referring now to FIG. 4 with continued reference to FIG. 3, planetary gear train 71 has a sun gear 98, planetary gears100 and an outer ring gear 102. Sun gear 98 is aligned along longitudinal axis A which defines an axis of rotation for sun gear 98. Planetary gears 100 are arranged radially about sun gear portion 98 and are coupled to a movable planetary carrier frame 103. Planetary carrier frame 103 has a center flange 104 (FIG. 3) that is also aligned along longitudinal axis A which defines an axis of rotation for planetary carrier frame 103. Planetary gears 100 are in meshing engagement with sun gear 98 and outer ring gear 102. Sun gear 98 is coupled to an end of input shaft 82 thereby aligning input shaft 82 along longitudinal axis A. Also planetary carrier frame 103 is coupled to an end of output shaft 84 through flange 104 which also aligns output shaft 84 along longitudinal axis. As torque is applied to input shaft 82 to cause it to rotate, sun gear 98 also rotates about axis A and the resulting applied force is transmitted from sun gear 98 to planetary gears 100 and onto planetary carrier frame 103. As planetary gears 100 rotate and revolve around outer ring gear 102, planetary carrier frame 103 rotates about longitudinal axis A and transmits the received torque to output shaft 84. Output shaft 84 also rotates coaxially with input shaft 82 about longitudinal axis A. Thereby, torque from input shaft 82 is transmitted through propulsor gearbox 60 to output shaft 84 and to propeller 26 (shown schematically in FIG. 3) through a coaxial arrangement of input shaft 82 and output shaft 84.

Prior art propulsor gearboxes utilize multiple-stage planetary gear trains for speed reduction. As prior art propulsor gearboxes implement pitch actuation in the gearbox, the requirement that input shaft and output shaft are coaxial is provided through at least a two-stage planetary gear train. However, in the present invention of propulsor gearbox 60, as propeller pitch actuation system at propulsor gearbox 60 is eliminated, the requirement for controlling access to pitch actuator rods within propulsor gearbox 60 is also eliminated. Another benefit of the configuration of propulsor gearbox 60 is that input shaft 82 is aligned coaxially with output shaft 84 through use of a single-stage planetary gear train 71 for speed reduction. Elimination of propeller pitch actuation with propulsor gearbox 60 also provides a very simplistic and lightweight design that minimizes weight of propulsor gearbox 60. Additional benefits include an integral lubrication system through an integral oil pump 94 that eliminates external lines to carry lubrication to propulsor gearbox 60.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions or equivalent arrangement not hereto described will be apparent to those of ordinary skill in the art without departing from the scope of the invention. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A translational thrust system (24) for a rotary wing aircraft, the translational thrust system (24) comprising
a translational thrust propeller (26);
a propulsor gearbox assembly (60) for the translational thrust propeller (26), comprising:
a housing (70) defining an interior cavity (72);
a single stage planetary gear assembly (71) contained within the interior cavity (72), the planetary gear assembly (71) comprising a planetary carrier frame (103) with a plurality of planetary gears (100);
an input shaft (82) aligned on a first axis of rotation; and
an output shaft (84) aligned along a second axis of rotation, the output shaft (84) being coupled along the second axis of rotation to the planetary carrier frame (103);
wherein the first axis of rotation is coaxial with the second axis of rotation; and
wherein the output shaft (84) is connected to the translational thrust propeller
**characterized in that** the propulsor gearbox assembly (60) further comprises:
a gear-driven pump (94) and a sump chamber (92) contained within the interior cavity (72), wherein the gear-driven pump (94) is configured to be driven by the planetary gear assembly (71);
a propeller pitch actuation system (106) provided externally from the propulsor gearbox assembly (60).

2. The translational thrust system (24) of claim 1, wherein the planetary gear assembly (71) comprises a sun gear (98) connected to the input shaft (82).

3. The translational thrust system (24) of claim 1, wherein the plurality of planetary gears (100) are configured to engage the sun gear (98) and rotate radially around the sun gear (98).

4. The translational thrust system (24) of claim 1 or 3, wherein the planetary carrier frame (103) is configured to rotate around the sun gear (98) in response to the rotation of the plurality of planetary gears (100).

5. The translational thrust system (24) of claim 1, further comprising a plurality of bearings, with a pair of bearings supporting the input shaft (82) and a pair of bearings supporting the output shaft (84).

6. The translational thrust system (24) of claim 1, wherein the input shaft (82) is configured to connect to a propeller drive shaft (56) for receiving input torque.

7. The translational thrust system (24) of claim 8, wherein the input shaft (82) is configured to connect to a clutch assembly (58), wherein the clutch assembly (58) is in mechanical engagement with the propeller drive shaft (56) for receiving input torque.

8. A method of providing auxiliary thrust to a translational thrust propeller (26) of a rotary-wing aircraft, comprising: providing a propulsor gearbox (60); wherein the propulsor gearbox (60) includes:
a housing (70) defining an interior cavity (72);
a single-stage planetary gear assembly (71) contained within the interior cavity (72), the planetary gear assembly (71) comprising a planetary carrier frame (103) with a plurality of planetary gears (100);
an input shaft (82) aligned on a first axis of rotation; an output shaft (84) connected to a planetary carrier frame (103) of the planetary gear assembly (71) and aligned along a second axis of rotation;
wherein the first axis of rotation is coaxial with the second axis of rotation;
connecting a propeller drive shaft (56) to the input shaft (82) of the propulsor gearbox (60);
connecting a translational thrust propeller (26) to the output shaft (84) of the propulsor gearbox (60); and
providing input torque to the propeller drive shaft (56) and rotationally driving the planetary gear assembly (71),
**characterized in that** the method further comprises
providing a gear-driven pump (94) and a sump chamber (92) within the interior cavity (72),
wherein the gear-driven pump (94) is configured to be driven by the planetary gear assembly (71) and providing a propeller pitch actuation system (106) provided externally from the propulsor gearbox assembly (60).

9. The method of claim 8, further comprising connecting a clutch assembly (58) between the tail propeller drive shaft and the input shaft (82), wherein the clutch assembly (58) is in mechanical engagement with the propeller drive shaft (56) for receiving the input torque.

10. The method of claim 8, further comprising transmitting the input torque to the planetary carrier frame (103) and rotationally driving the output shaft (84).

## Patentansprüche

1. Translationsschubsystem (24) für ein Drehflügelluftfahrzeug, wobei das Translationsschubsystem (24) Folgendes umfasst:
einen Translationsschubpropeller (26);
eine Antriebsgetriebebaugruppe (60) für den Translationsschubpropeller (26), umfassend:
ein Gehäuse (70), das einen Innenhohlraum (72) definiert;
eine einstufige Planetengetriebebaugruppe (71), die in dem Innenhohlraum (72) enthalten ist, wobei die Planetengetriebebaugruppe (71) einen Planetenträgerrahmen (103) mit einer Vielzahl von Planetengetrieben (100) umfasst;
eine Eingangswelle (82), die auf einer ersten Drehachse ausgerichtet ist; und
eine Ausgangswelle (84), die entlang einer zweiten Drehachse ausgerichtet ist, wobei die Ausgangswelle (84) entlang der zweiten Drehachse an den Planetenträgerrahmen (103) gekoppelt ist;
wobei die erste Drehachse koaxial mit der zweiten Drehachse ist; und
wobei die Ausgangswelle (84) mit dem Translationsschubpropeller verbunden ist;
**dadurch gekennzeichnet, dass** die Antriebsgetriebebaugruppe (60) ferner Folgendes umfasst:
eine getriebeangetriebene Pumpe (94) und eine Sumpfkammer (92), die in dem Innenhohlraum (72) enthalten sind, wobei die getriebeangetriebene Pumpe (94) konfiguriert ist, um durch die Planetengetriebebaugruppe (71) angetrieben zu werden;
ein Propellerneigungsbetätigungssystem (106), das außerhalb der Antriebsgetriebebaugruppe (60) bereitgestellt ist.

2. Translationsschubsystem (24) nach Anspruch 1, wobei die Planetengetriebebaugruppe (71) ein Sonnengetriebe (98) umfasst, das mit der Eingangswelle (82) verbunden ist.

3. Translationsschubsystem (24) nach Anspruch 1, wobei die Vielzahl von Planetengetrieben (100) konfiguriert ist, um das Sonnengetriebe (98) in Eingriff zu nehmen und sich radial um das Sonnengetriebe (98) herum zu drehen.

4. Translationsschubsystem (24) nach Anspruch 1 oder 3, wobei der Planetenträgerrahmen (103) konfiguriert ist, um sich als Reaktion auf die Drehung der Vielzahl von Planetengetrieben (100) um das Sonnengetriebe (98) herum zu drehen.

5. Translationsschubsystem (24) nach Anspruch 1, ferner umfassend eine Vielzahl von Lagern, wobei ein Paar an Lagern die Eingangswelle (82) trägt und ein Paar an Lagern die Ausgangswelle (84) trägt.

6. Translationsschubsystem (24) nach Anspruch 1, wobei die Eingangswelle (82) konfiguriert ist, um mit einer Propellerantriebswelle (56) verbunden zu werden, um Eingangsdrehmoment zu empfangen.

7. Translationsschubsystem (24) nach Anspruch 8, wobei die Eingangswelle (82) konfiguriert ist, um mit einer Kupplungsbaugruppe (58) verbunden zu werden, wobei die Kupplungsbaugruppe (58) in mechanischem Eingriff mit der Propellerantriebswelle (56) steht, um Eingangsdrehmoment zu empfangen.

8. Verfahren zum Bereitstellen von zusätzlichem Schub an einen Translationsschubpropeller (26) eines Drehflügelluftfahrzeugs, umfassend: Bereitstellen eines Antriebsgetriebes (60); wobei das Antriebsgetriebe (60) Folgendes beinhaltet:
ein Gehäuse (70), das einen Innenhohlraum (72) definiert;
eine einstufige Planetengetriebebaugruppe (71), die in dem Innenhohlraum (72) enthalten ist, wobei die Planetengetriebebaugruppe (71) einen Planetenträgerrahmen (103) mit einer Vielzahl von Planetengetrieben (100) umfasst;
eine Eingangswelle (82), die auf einer ersten Drehachse ausgerichtet ist; eine Ausgangswelle (84), die mit einem Planetenträgerrahmen (103) der Planetengetriebebaugruppe (71) verbunden und entlang einer zweiten Drehachse ausgerichtet ist; wobei die erste Drehachse koaxial mit der zweiten Drehachse ist; Verbinden einer Propellerantriebswelle (56) mit der Eingangswelle (82) des Antriebsgetriebes (60);
Verbinden eines Translationsschubpropellers (26) mit der Ausgangswelle (84) des Antriebsgetriebes (60); und
Bereitstellen von Eingangsdrehmoment an die Propellerantriebswelle (56) und drehendes Antreiben der Planetengetriebebaugruppe (71),
**dadurch gekennzeichnet, dass** das Verfahren ferner Folgendes umfasst:
Bereitstellen einer getriebeangetriebenen Pumpe (94) und einer Sumpfkammer (92) innerhalb des Innenhohlraums (72), wobei die getriebeangetriebene Pumpe (94) konfiguriert ist, um durch die Planetengetriebebaugruppe (71) angetrieben zu werden, und
Bereitstellen eines Propellerneigungsbetätigungssystems (106), das außerhalb der Antriebsgetriebebaugruppe (60) bereitgestellt ist.

9. Verfahren nach Anspruch 8, ferner umfassend das Verbinden einer Kupplungsbaugruppe (58) zwischen der hinteren Propellerantriebswelle und der Eingangswelle (82), wobei die Kupplungsbaugruppe (58) in mechanischem Eingriff mit der Propellerantriebswelle (56) steht, um das Eingangsdrehmoment zu empfangen.

10. Verfahren nach Anspruch 8, ferner umfassend das Übertragen des Eingangsdrehmoments an den Planetenträgerrahmen (103) und das drehende Antreiben der Ausgangswelle (84).

## Revendications

1. Système de poussée en translation (24) pour un aéronef à voilure tournante, le système de poussée en translation (24) comprenant
une hélice de poussée en translation (26) ;
un ensemble boîte d'engrenages de propulseur (60) pour l'hélice de poussée en translation (26), comprenant :
un logement (70) définissant une cavité intérieure (72) ;
un ensemble engrenage planétaire à étage unique (71) contenu dans la cavité intérieure (72), l'ensemble engrenage planétaire (71) comprenant un cadre de support planétaire (103) avec une pluralité d'engrenages planétaires (100) ;
un arbre d'entrée (82) aligné sur un premier axe de rotation ; et
un arbre de sortie (84) aligné le long d'un second axe de rotation, l'arbre de sortie (84) étant couplé le long du second axe de rotation au cadre de support planétaire (103) ;
dans lequel le premier axe de rotation est coaxial au second axe de rotation ; et
dans lequel l'arbre de sortie (84) est relié à l'hélice de poussée en translation, **caractérisé en ce que** l'ensemble boîte d'engrenages de propulseur (60) comprend en outre :
une pompe entraînée par engrenage (94) et une chambre de puisard (92) contenue dans la cavité intérieure (72), dans lequel la pompe entraînée par engrenage (94) est configurée pour être entraînée par l'ensemble engrenage planétaire (71) ;
un système d'actionnement de pas d'hélice (106) fourni à l'extérieur de l'ensemble boîte d'engrenages de propulseur (60) .

2. Système de poussée en translation (24) selon la revendication 1, dans lequel l'ensemble engrenage planétaire (71) comprend un planétaire (98) relié à l'arbre d'entrée (82).

3. Système de poussée en translation (24) selon la revendication 1, dans lequel la pluralité d'engrenages planétaires (100) sont configurés pour venir en prise avec le planétaire (98) et tourner radialement autour du planétaire (98) .

4. Système de poussée en translation (24) selon la revendication 1 ou 3, dans lequel le cadre de support planétaire (103) est configuré pour tourner autour du planétaire (98) en réponse à la rotation de la pluralité d'engrenages planétaires (100) .

5. Système de poussée en translation (24) selon la revendication 1, comprenant en outre une pluralité de paliers, une paire de paliers supportant l'arbre d'entrée (82) et une paire de paliers supportant l'arbre de sortie (84).

6. Système de poussée en translation (24) selon la revendication 1, dans lequel l'arbre d'entrée (82) est configuré pour être relié à un arbre d'entraînement d'hélice (56) pour recevoir un couple d'entrée.

7. Système de poussée en translation (24) selon la revendication 8, dans lequel l'arbre d'entrée (82) est configuré pour être relié à un ensemble embrayage (58), dans lequel l'ensemble embrayage (58) est en prise mécanique avec l'arbre d'entraînement d'hélice (56) pour recevoir le couple d'entrée.

8. Procédé de fourniture d'une poussée auxiliaire à une hélice de poussée en translation (26) d'un aéronef à voilure tournante, comprenant : la fourniture d'une boîte d'engrenages de propulseur (60) ; dans lequel la boîte d'engrenages de propulseur (60) comporte :
un logement (70) définissant une cavité intérieure (72) ;
un ensemble engrenage planétaire à étage unique (71) contenu dans la cavité intérieure (72), l'ensemble engrenage planétaire (71) comprenant un cadre de support planétaire (103) avec une pluralité d'engrenages planétaires (100) ;
un arbre d'entrée (82) aligné sur un premier axe de rotation ; un arbre de sortie (84) relié à un cadre de support planétaire (103) de l'ensemble engrenage planétaire (71) et aligné le long d'un second axe de rotation ;
dans lequel le premier axe de rotation est coaxial au second axe de rotation ;
le raccordement d'un arbre d'entraînement d'hélice (56) à l'arbre d'entrée (82) de la boîte d'engrenages de propulseur (60) ;
le raccordement d'une hélice de poussée en translation (26) à l'arbre de sortie (84) de la boîte d'engrenages de propulseur (60) ; et
la fourniture d'un couple d'entrée à l'arbre d'entraînement d'hélice (56) et l'entraînement en rotation de l'ensemble engrenage planétaire (71), **caractérisé en ce que** le procédé comprend en outre
la fourniture d'une pompe entraînée par engrenage (94) et d'une chambre de puisard (92) dans la cavité intérieure (72), dans lequel la pompe entraînée par engrenage (94) est configurée pour être entraînée par l'ensemble engrenage planétaire (71) et la fourniture d'un système d'actionnement de pas d'hélice (106) fourni à l'extérieur de l'ensemble boîte d'engrenages de propulseur (60).

9. Procédé selon la revendication 8, comprenant en outre le raccordement d'un ensemble embrayage (58) entre l'arbre d'entraînement d'hélice de queue et l'arbre d'entrée (82), dans lequel l'ensemble embrayage (58) est en prise mécanique avec l'arbre d'entraînement d'hélice (56) pour recevoir le couple d'entrée.

10. Procédé selon la revendication 8, comprenant en outre la transmission du couple d'entrée au cadre de support planétaire (103) et l'entraînement en rotation de l'arbre de sortie (84).
